# EUROPEAN PATENT SPECIFICATION

(11) **EP 2 243 382 B1**
(45) Date of publication and mention of the grant of the patent: **04.10.2017**
(21) Application number: 10159680.7
(22) Date of filing: 12.04.2010
(51) Int. Cl.: A23L 19/12, A23L 19/18

(54) **Method for preparing a half-product for a deep-fried food on the basis of potato and at least one vegetable**
Verfahren zur Zubereitung eines Halbproduktes für ein frittiertes Nahrungsmittel auf der Basis von Kartoffel und mindestens einem Gemüse
Procédé de préparation d'un demi-produit pour un aliment frit à base de pomme de terre et d'au moins un légume

(30) Priority: 23.04.2009 NL 2002781
(43) Date of publication of application: 27.10.2010
(73) Proprietor: Van Eeuwijk, Johannes Josef Maria, 5825 BW Overloon (NL)
(72) Inventor: Van Eeuwijk, Johannes Josef Maria, 5825 BW Overloon (NL)
(74) Representative: Dokter, Hendrik Daniel

(56) References cited:
- EP-A1- 0 155 782
- EP-A1- 0 800 773
- EP-A1- 1 574 138
- EP-A1- 1 574 139
- EP-A1- 1 815 753
- WO-A1-83/03336
- FR-A1- 2 665 059
- FR-A1- 2 767 031
- GB-A- 1 109 930
- JP-A- 6 261 707
- JP-A- 56 023 840
- US-A- 3 812 274
- US-A- 3 886 291
- US-A- 4 238 517
- US-A1- 2003 017 253
- ANONIEM: "Broccoli stamppot / kroketjes" SMULWEB RECEPTEN, [Online] 7 February 2005 (2005-02-07), XP002560210 Retrieved from the Internet: URL:http://www.smulweb.nl/1111394/koken/re cept/Broccoli-stamppot-kroketjes> [retrieved on 2009-12-09]
- GRZESKOWIAK B ET AL ISBN 0-442-25662-0: "Potato-pea chips - a new product with good shelf-life and high nutritive value." PRZEMYSL SPOZYWCZY 1987 INST. ZYWIENIA CZLOWIEKA AKAD. ROLNICZEJ, POZNAN, POLAND, vol. 41, no. 7, 1987, pages 200-201, XP008116151

## Description

The invention relates to a method for preparing a half-product for a deep-fried food on the basis of par-cooked potato, which food also comprises at least one vegetable in addition to cooked potato, comprising the steps of (i) providing a determined quantity by weight of par-cooked potato, (ii) providing a determined quantity by weight of the at least one vegetable, and (iii) mixing the quantities of potato and at least one vegetable, wherein (iv) a binding agent is added during performing the step (iii) of mixing, followed by the steps of (v) portioning the half-product prepared in steps (i) to (iv) into portions for deep-frying, and (vi) freezing the portions obtained in step (v).

A method for preparing a par-cooked potato product, such as chips or crisps, is known from International patent publication WO 2004/082400. According to this known method potatoes are processed into potato products of desired form and dimensions, and these potato products are successively blanched, dipped in a solution to prevent non-enzymatic oxidation, dried, coated in an emulsion containing starch, oil, salt and colouring, dried with hot air and cooled.

The known method is unsuitable for preparing a half-product for a food which is made ready for consumption by deep-frying or otherwise heating in a liquid when this food also comprises at least one vegetable in addition to cooked potato. A mixture of cooked potato and a chopped or cut vegetable, known as hotchpotch or mash pot, is unsuitable for deep-frying in oil or melted fat or heating in another liquid, for instance a stock, because it disintegrates in the liquid. Disintegration can be prevented by wholly wrapping in a puff pastry or breading the half-product. A casing of puff pastry and a coating of breadcrumbs do however affect the taste, the tactile impressions and the appearance of the final product, and have the effect of increasing costs.

EP 0 800 773 A1 discloses a method for producing an intermediate product for mashed potato, comprising the step of supplying to a flow of cooked potato pulp discharged from a turbo-cooker into a turbo-mixer simultaneously with metered flows of ingredients comprising flour, milk, salt, butter, margarine, spices, herbs and flavourings which have been rendered pumpable. The mashed potato is metered into sealed packages, which packages are subjected to freezing.

JP 56 023840 A discloses a method for the preparation of frozen potato salad, which is not to be deep-fried.

URL:htto://www.smulweb.nl/1111394/koken/recept/Broccoli-stamppot-kroketjes relates to a recipe for backing croquettes or little balls of a mixture of mashed potatoes and broccoli in a frying pan, rather than deep-frying in oil.

EP 1 574 138 A1 discloses a low-fat, low-moisture crispy food product on the basis of potato and/or corn and/or rice said food being a particle or plurality of loosely crinkled dough sheet, to which a vegetable may be added. The low fat food product, having typical an oval shape, length about 4 cum width about 3 cm, and thickness 0,35 mm, is finally prepared by drying in an oven for approximately two and a half hour at 98 °C.

EP 1 574 139 A1 discloses a crispy snack food on the basis of potato, corn and/or rice, said food comprising dried clusters of thin particulates or sheet fragments of dough, to which a vegetable may be added. The snack food, comprising three loosely laminate layers each with thickness 0,35 mm, is finally prepared by drying in an oven for approximately two and a half hour at 95 °C.

GB 1 109 930 A relates to the production of prefabricated fried potato products. According to the method disclosed, a damp friable powder, containing a freshly prepared potato mash, which may contain minor amounts of celery or onion powder, is extruded into hot oil in the form of elongated pieces or straws.

FR 2 665 059 A1 discloses a recipe for sliced pieces of a food product, comprising mushrooms or seaweed and potato powder, said pieces being heated in very hot oil, without allowing the pieces being cooked or baked.

US 3 886 291 A relates to an expanded fried potato-solids containing porous snack product which when viewed in transverse cross section has a total thickness of between about 1,7 and 2,5 mm (0.065 and 0.1 inches). The potato-solids disclosed are readymade potato chips, prepared according to a method which is unsuitable for preparing a half-product described above.

EP 0 155 782 A1 relates to a cheese food containing mashed potato and water. The cheese food disclosed is a readymade product, obtained by mixing, kneading with stirring at a raised temperature, solidifying the finished product by cooling, and portioning or slicing.

EP 1 815 753 A1 discloses a method for preparing an intermediate food product on potatoes and/or cereals and/or legumes for the production of snacks.). The food products disclosed are intermediates for readymade potato chips, prepared according to a method which is unsuitable for preparing a half-product described above.

US 2003/0017253 A1 relates to a snack dough, containing 0,1% to about 4% added potato fiber, which dough can be sheeted, shaped and fried, resulting in a fabricated chip.

GRZESKOWIAK B ET AL ISBN 0-442-25662-0 PRZEMYSL SPOZYWCZY 1987 INST. ZYWIENIA CZLOWIEKA AKAD. ROLNICZEJ, POZNAN, POLAND, vol. 41, no. 7, 1987, pages 200-201, XP008116151 relates to potato-pea chips.

WO 83/03336 A1 discloses a method for manufacturing a deep-frozen puree, which puree consists of potatoes and usual additional ingredients such as milk, fat and optionally emulsifiers and better.

US 3 812 274 A discloses a process for preparing shaped potato products containing solely freshly cooked and mashed potato tissue.

FR 2 767 031 A1 discloses a method for the preparation of mashed and a deep-frozen product based on fish.

JP 6 261707 A discloses a method for the production of a potato paste in which subsidiary raw materials such as sweetener, a binder and a taste improver are as small as possible, to keep the character of potato.

US 4 238 517 A discloses a frozen French fried potato product for heating in a toaster or oven, said product not containing any vegetables.

It is an object of the invention to provide a method for preparing a half-product for a non-breaded food on the basis of potato to be heated in a liquid, which food comprises at least one vegetable in addition to potato. It must be possible to make this food ready for consumption by deep-frying in oil or melted fat, or by other heating in a liquid, for instance by heating in a stock. The half-product, and thereby the food, must be free of a casing of breadcrumbs or into quantities with a mass and form suitable for addition to a stock.

A half-product with this mass and form is particularly suitable in the preparation of both clear and creamy meat-free soups, wherein after heating of the respective soup the half-products fulfil the function of meat-free balls with their own individual taste and nutritional value.

Another embodiment is characterized by a step (v) of portioning the half-product prepared in steps (i) to (iv) into quantities with a mass and form suitable for deep-frying, these quantities being for instance spherical, block-shaped or triangular.

A particularly advantageous method for preparing a half-product, wherein prepared quantities of half-product have a mass and form suitable for deep-frying, is characterized by a step (vi) of providing the prepared quantities of half-product with a profiled surface.

A profiled surface provides the advantage that during deep-frying the half-product does not adhere to the wall of a fryer basket and feels fat-free after deep-frying, this being important in a deep-fried half-product which is suitable after deep-frying for eating as a snack with the fingers. In order to provide the determined quantity of the half-product with a profiled surface, use is for instance made of a conveyor belt with a mesh-like running surface, above which a second mesh reciprocally movable in transverse direction is tensioned at a distance corresponding to the desired diameter of a spherical final product.

In a method according to the invention the vegetable is for instance selected from the group of cabbage varieties, root and tuber varieties, stem vegetables, leaf vegetables, shoots, legumes, flower vegetables, toadstools, herbs and fruits.

The cabbage varieties for instance comprise at least cauliflower, kale, white cabbage, red cabbage, savoy cabbage, oxheart cabbage and sauerkraut.

The root and tuber varieties for instance comprise at least swede, carrots, yellow carrots, scorzonera, red beets, yellow beets, washed carrot, chicory, radicchio, fennel, horseradish, parsnips and asparagus.

The stem vegetables for instance comprise at least pak-choi, Chinese cabbage, kohlrabi, leek, rhubarb, spring onion and celeriac.

The leaf vegetables for instance comprise at least spinach, radish sprouts, endive, red lettuce, parsley, purslane, celery and sorrel.

The shoots for instance comprise at least alfalfa, bean sprouts and red radish sprouts.

The legumes for instance comprise at least haricots verts, mange-touts, sugar snaps, green peas, broad beans, runner beans and green beans.

The flower vegetables for instance comprise at least cauliflower, green cauliflower and broccoli.

The toadstools for instance comprise at least mushrooms, horse mushrooms, chestnut mushrooms, oyster mushrooms, portobello mushrooms, shiitake mushrooms, chanterelle mushrooms and hedgehog mushrooms.

The herbs for instance comprise at least parsley, celery, basil, chives, lemon balm, dill, tarragon, chervil, coriander, lovage, mint, oregano, rosemary, sage and thyme.

The fruits for instance comprise at least aubergine, cucumber, fresh tomato, dried tomato, courgette, pineapple, apple and peppers.

In an embodiment of a method according to the invention which is particularly suitable for preparing a vegetarian half-product, the half-product is prepared at least substantially from ingredients of vegetable origin.

The invention also relates to a half-product for a non-breaded food to be heated in liquid, comprising a determined quantity of a mixture of par-cooked potato and at least one variety of vegetable obtainable according to an above described method.

The invention further relates to a method for heating a non-breaded food on the basis of potato in a liquid, wherein an above described half-product is heated in a liquid. This method relates particularly to deep-frying of the half-product in frying oil or fat, or heating thereof in a stock.

It is noted that the above listed series of examples of vegetables suitable for preparation to a half-product in combination with a determined quantity of potato according to the described method is not intended to be exhaustive but merely illustrative. The method according to the invention relates in principle to any variety of vegetable which can be combined with a determined quantity of potato in a dish. In addition to said starch variants, carob bean flour and guar gum can for instance also be applied as binder.

### Example 1

In a mixing tub 38.46 kg mashed potato is mixed with 11.54 kg blanched spinach, with the addition of 3.00 kg of a binder composed of modified starch of the types E1412 and E1422, and potato fibres. After the mixing the mass is portioned into portions of 26 g, which are then rolled into balls with a profiled surface on a conveyor belt with mesh-like running surface. The thus obtained half-product is frozen for delivery to a final processor, for instance a central kitchen of a care institution or a snack bar.

### Example 2

In a mixing tub 35.71 kg mashed potato is mixed with 14.29 kg sauerkraut, with the addition of 5.00 kg of a binder composed of modified starch of the types E1412 and E1422, and potato fibres. After the mixing the mass is portioned into portions of 26 g, which are then rolled into balls with a profiled surface on a conveyor belt with mesh-like running surface. The thus obtained half-product is frozen for delivery to the final processor.

### Example 3

In a mixing tub 37.04 kg mashed potato is mixed with 12.96 kg blanched celeriac cubes, with the addition of 3.00 kg of a binder composed of modified starch of the types E1412 and E1422, and potato fibres. After the mixing the mass is portioned into portions of 26 g, which are then rolled into balls with a profiled surface on a conveyor belt with mesh-like running surface. The thus obtained half-product is frozen for delivery to the final processor.

### Example 4

In a mixing tub 49.02 kg mashed potato is mixed with 245 g fresh thyme, 245 g fresh celery, 245 g fresh basil and 245 g fresh rosemary, with the addition of 3.00 kg of a binder composed of modified starch of the types E1412 and E1422, and potato fibres. After the mixing the mass is portioned into portions of 26 g, which are then rolled into balls with a profiled surface on a conveyor belt with mesh-like running surface. The thus obtained half-product is frozen for delivery to the final processor.

## Claims

1. Method for preparing a half-product for a deep-fried food on the basis of par-cooked potato, which food also comprises at least one vegetable in addition to cooked potato, comprising the steps of
(i) providing a determined quantity by weight of par-cooked potato,
(ii) providing a determined quantity by weight of the at least one vegetable, and
(iii) mixing the quantities of potato and at least one vegetable, wherein
(iv) a binding agent is added during performing the step (iii) of mixing, followed by the steps of
(v) portioning the half-product prepared in steps (i) to (iv) into portions for deep-frying, and
(vi) freezing the portions obtained in step (v),
**characterized in that**
the ratio of the determined quantity by weight of par-cooked potato and the determined quantity by weight of at least one vegetable lies in the range between 1:10 and 10:1,
the binding agent is a heat-resistant binding agent
the portions are free of breading or puff pastry, and **in that**
the portions are provided with a profiled surface prior to step (vi).

2. Method as claimed in claim 1, **characterized by** the portions for deep-frying are spherical.

3. Method as claimed in any of the claims 1-2, **characterized in that** the heat-resistant binding agent comprises at least one starch.

4. Method as claimed in claim 4 3, **characterized in that** the starch comprises at least one of the types of distarch phosphate (E1412) and acetylated starch (E1422).

5. Method as claimed in any of the claims 1-4, **characterized in that** the binder comprises potato fibres.

6. Method as claimed in any of the claims 1-5, **characterized in that** the vegetable is selected from the group of cabbage varieties, root and tuber varieties, stem vegetables, leaf vegetables, shoots, legumes, flower vegetables, toadstools, herbs and fruits.

7. Method as claimed in claim 6, **characterized in that** the cabbages varieties comprise at least cauliflower, kale, white cabbage, red cabbage, savoy cabbage, oxheart cabbage and sauerkraut.

8. Method as claimed in claim 6, **characterized in that** the root and tuber varieties comprise at least swede, carrots, yellow carrots, scorzonera, red beets, yellow beets, washed carrot, chicory, radicchio, fennel, horseradish, parsnips and asparagus.

9. Method as claimed in claim 6, **characterized in that** the stem vegetables comprise at least pak-choi, Chinese cabbage, kohlrabi, leek, rhubarb, spring onion and celeriac.

10. Method as claimed in claim 6, **characterized in that** the leaf vegetables comprise at least spinach, radish sprouts, endive, red lettuce, parsley, purslane, celery and sorrel.

11. Method as claimed in claim 6, **characterized in that** the flower vegetables comprise at least cauliflower, green cauliflower and broccoli.

12. Method as claimed in claim 6, **characterized in that** the toadstools comprise at least mushrooms, horse mushrooms, chestnut mushrooms, oyster mushrooms, portobello mushrooms, shiitake mushrooms, chanterelle mushrooms and hedgehog mushrooms.

13. Method as claimed in claim 6, **characterized in that** the herbs comprise at least parsley, celery, basil, chives, lemon balm, dill, tarragon, chervil, coriander, lovage, mint, oregano, rosemary, sage and thyme.

14. Method as claimed in claim 6, **characterized in that** the fruits comprise at least aubergine, cucumber, fresh tomato, dried tomato, courgette, pineapple, apple and peppers.

## Patentansprüche

1. Verfahren zum Bereiten eines Halbprodukts für ein frittiertes Nahrungsmittel auf der Basis von vorgekochter Kartoffel, welches Nahrungsmittel neben vorgekochter Kartoffel auch zumindest ein Gemüse enthält, umfassend die Schritte des
(i) Bereitstellens einer bestimmten Gewichtsmenge vorgekochter Kartoffel,
(ii) Bereitstellens einer bestimmten Gewichtsmenge von zumindest einem Gemüse, und
(iii) Mischens von den Mengen an Kartoffel und zumindest einem Gemüse, wobei
(iv) während der Ausführung des Schrittes (iii) des Mischens ein Bindemittel hinzugeführt wird, gefolgt durch die Schritte des
(v) Portionierens des in den Schritten (i) bis (iv) zubereiteten Halbproduktes in zu frittierende Portionen, und
(vi) Einfrierens der im Schritt (v) erhaltenen Portionen, **dadurch gekennzeichnet, dass**
das Verhältnis der bestimmten Gewichtsmenge vorgekochter Kartoffel und der bestimmten Gewichtsmenge von zumindest einem Gemüse in dem Bereich zwischen 1:10 und 10:1 liegt,
das Bindemittel ein hitzebeständiges Bindemittel ist
die Portionen frei von Paniermittel oder Blätterteig sind, und dass
vor dem Schritt (vi) den Portionen eine profilierte Oberfläche bereitgestellt wird.

2. Verfahren gemäß Anspruch 1, **dadurch gekennzeichnet, dass** die zu frittierenden Portionen kugelförmig sind.

3. Verfahren gemäß einem der Ansprüche 1-2, **dadurch gekennzeichnet, dass** das hitzebeständige Bindemittel zumindest eine Stärke umfasst.

4. Verfahren gemäß Anspruch 3, **dadurch gekennzeichnet, dass** die Stärke zumindest einen der Typen Distärkephosphat (E1412) und acetylierte Stärke (E1422) umfasst.

5. Verfahren gemäß einem der Ansprüche 1-4, **dadurch gekennzeichnet, dass** das Bindemittel Kartoffelfasern umfasst.

6. Verfahren gemäß einem der Ansprüche 1-5, **dadurch gekennzeichnet, dass** das Gemüse ausgewählt ist aus der Gruppe der Kohlgemüsesorten, Wurzel- und Knollengemüse, Stielgemüse, Blattgemüse, Sprossengemüse, Hülsenfrüchte, Blütengemüse, Pilze, Kräuter und Fruchtgemüse.

7. Verfahren gemäß Anspruch 6, **dadurch gekennzeichnet, dass** die Kohlsorten zumindest Blumenkohl, Grünkohl, Weißkohl, Rotkohl, Wirsing, Spitzkohl und Sauerkraut umfassen.

8. Verfahren gemäß Anspruch 6, **dadurch gekennzeichnet, dass** die Wurzel- und Knollengemüse zumindest Steckrübe, Möhren, gelbe Möhren, Schwarzwurzeln, rote Beete, gelbe Beete, Bundmöhren, Chicoree, roter Chicoree, Fenchel, Rettich, Pastinaken und Spargel umfassen.

9. Verfahren gemäß Anspruch 6, **dadurch gekennzeichnet, dass** die Stielgemüse zumindest Pak Choi, Chinakohl, Kohlrabi, Lauch, Rhabarber, Frühlingszwiebel und Knollensellerie umfassen.

10. Verfahren gemäß Anspruch 6, **dadurch gekennzeichnet, dass** die Blattgemüse zumindest Spinat, Radieschensprossen, Endivie, Rotblättriger Salat, Blattpetersilie, Portulak, Staudensellerie und Sauerampfer umfassen.

11. Verfahren gemäß Anspruch 6, **dadurch gekennzeichnet, dass** die Blattgemüse zumindest Blumenkohl, grünen Blumenkohl und Brokkoli umfassen.

12. Verfahren gemäß Anspruch 6, **dadurch gekennzeichnet, dass** die Pilze zumindest Champignons, Anischampignons, Kastanienchampignons, Austern-Seitlinge, Portobellos, Shiitakes, Pfifferlinge und Semmel-Stoppelpilze umfassen.

13. Verfahren gemäß Anspruch 6, **dadurch gekennzeichnet, dass** die Kräuter zumindest Petersilie, Sellerie, Basilikum, Schnittlauch, Zitronenmelisse, Dill, Dragon, Kerbel, Koriander, Liebstöckel, Minze, Oregano, Rosmarin, Salbei und Thymian umfassen.

14. Verfahren gemäß Anspruch 6, **dadurch gekennzeichnet, dass** die Fruchtgemüse zumindest Aubergine, Salatgurke, frische Tomate, getrocknete Tomate, Zucchini, Ananas, Apfel und Paprika umfassen.

## Revendications

1. Procédé de préparation d'un demi-produit pour un aliment frit à base de pommes de terre précuites, ledit aliment comprenant également au moins un légume en plus des pommes de terre cuites, comprenant les étapes suivantes:
(i) fournir une quantité en poids déterminée de pommes de terres précuites,
(ii) fournir une quantité en poids déterminée dudit au moins un légume, et
(iii) mélanger les quantités de pommes de terre et d'au moins un légume, dans lequel
(iv) un agent liant est ajouté pendant l'exécution de l'étape (iii) de mélange,suivies par les étapes suivantes:
(v) diviser le demi-produit préparé aux étapes (i) à
(iv) en plusieurs portions à frire, et
(vi) congeler les portions obtenues à l'étape (v),
**caractérisé en ce que**:
le rapport entre la quantité en poids déterminée de pommes de terre précuites et la quantité en poids déterminée d'au moins un légume est compris dans la gamme de 1:10 à 10:1,
l'agent liant est un agent liant résistant à la chaleur,
les portions sont exemptes de panure ou de pâte feuilletée,
et **en ce que** les portions sont configurées avec une surface profilée avant l'étape (vi)

2. Procédé selon l'une quelconque des revendications 1, **caractérisé en ce que** les portions à frire sont sphériques.

3. Procédé selon la revendication l'une quelconque des revendications 1 à 2, **caractérisé en ce que** l'agent liant résistant à la chaleur comprend au moins un amidon.

4. Procédé selon la revendication 3, **caractérisé en ce que** l'amidon comprend au moins un amidon parmi les types de phosphate de diamidon (E1412) et d'amidon acétylé (E1422).

5. Procédé selon l'une quelconque des revendications 1 à 4, **caractérisé en ce que** l'agent liant comprend des fibres de pomme de terre.

6. Procédé selon l'une quelconque des revendications 1 à 5, **caractérisé en ce que** le légume est sélectionné parmi le groupe comprenant des variétés de chou, des variétés de légumes-racines et de tubercules, des légumes à tige, des légumes à feuilles, des pousses, des légumineuses, des légumes à fleurs, des champignons, des herbes aromatiques et des fruits.

7. Procédé selon la revendication 6, **caractérisé en ce que** les variétés de chou comprennent au moins le chou-fleur, le chou vert, le chou blanc, le chou rouge, le chou de Savoie, le chou coeur de boeuf et le chou pommé blanc (choucroute).

8. Procédé selon la revendication 6, **caractérisé en ce que** les variété de légumes-racines et de tubercules comprennent au moins le rutabaga, les carottes, les carottes jaunes, le scorsonère, les betteraves rouges, les betteraves jaunes, les carottes lavées, la chicorée, le radicchio (chicorée rouge), le fenouil, le raifort, les panais et les asperges.

9. Procédé selon la revendication 6, **caractérisé en ce que** les légumes à tige comprennent au moins le pak-choï, le chou chinois, le chou-rave, les poireaux, la rhubarbe, les oignons de printemps et le céleri-rave.

10. Procédé selon la revendication 6, **caractérisé en ce que** les légumes à feuilles comprennent au moins les épinards, les germes de radis, les endives, la laitue rouge, le persil, le pourpier, le céleri en branche et l'oseille.

11. Procédé selon la revendication 6, **caractérisé en ce que** les légumes à fleur comprennent au moins le chou-fleur et le chou-fleur vert et le brocoli.

12. Procédé selon la revendication 6, **caractérisé en ce que** les champignons comprennent au moins les champignons, l'aqaric des jachères, les champignons de Paris blonds, les pleurotes, les champignons portobello, les champignons shiitake, les chanterelles et les champignons hérisson.

13. Procédé selon la revendication 6, **caractérisé en ce que** les herbes aromatiques comprennent au moins le persil, le céleri, le basilique, la ciboulette, la mélisse citronnée, l'aneth, l'estragon, le cerfeuil, la coriandre, la livèche, la menthe, l'origan, le romarin, la sauge et le thym.

14. Procédé selon la revendication 6, **caractérisé en ce que** les fruits comprennent au moins les aubergines, les concombres, les tomates fraîches, les tomates séchées, les courgettes, les ananas, les pommes et les poivrons.
